# EUROPEAN PATENT APPLICATION

(11) **EP 1 167 555 A1**
(43) Date of publication of application: **02.01.2002**
(21) Application number: 00113233.1
(22) Date of filing: 21.06.2000
(51) Int. Cl.: C22B 11/00, C22B 3/24, C22B 3/44, B01J 39/06, B01D 15/08

(54) **Chromatographic interseparation of platinum group metals**

(71) Applicant: Prior Technologie Gesellschaft m.b.H., 6840 Götzis (AT)
(72) Inventor: Prior, Adalbert, Dr., 6840 Götzis (AT); Shang, Yuxing, Dr., 1213 Petit-Lancy (CH)
(74) Representative: Büchel, Kurt F., Dr.

(57) **Abstract**

The invention relates to a chromatographic method for interseparating platinum group metals from a feed solution, wherein the feed solution is oxidated prior to the chromatographic separation to reach a redox-potential of at least 900 mV, whereupon the solution may be aged for at least 12 hours to achieve maximum conversion of Ir(III) to Ir (IV).
After elution of the Rh and Pt fractions reductive step elution is performed to accelerate elution of at least the Ir fraction. Iridium and rhodium are collected in different fractions of high purity.

## Description

### TECHNICAL FIELD

The invention relates to interseparation of metals of the platinum group, for example from refinery solutions, by chromatographic methods. In particular, the invention relates to a method for the interseparation of platinum group metals wherein rhodium and iridium are eluted as separate fractions.

### BACKGROUND

WO 99/14385 describes a chromatographic method for the interseparation of platinum group metals (PGMs) from a feedstock solution in hydrochloric acid, wherein the acidity of the feedstock solution is in the range of 5.5 to 6.5 M HCI and the redox-potential of the feedstock solution is adjusted from 550 to 600 mV, to achieve a maximum separation of the platinum, palladium and osmium fractions from each other. The method does not, however, achieve an interseparation of the iridium, rhodium and ruthenium fractions which are eluted together in a common fraction.

WO 99/13115 describes a chromatographic method, wherein the platinum group metals (e.g. Ru, Rh, Pd, Os, Ir, Pt) are subjected to acid leaching under severe oxidizing conditions before their chromatographic separation. A redox-potential of at least 700 mV, preferably of 800 to 1200 mV, is adjusted to establish complete conversion of Ir(III) to Ir(IV).

The preparation of the crude feeding solution, e.g. originating from a refinery, may start with a dry chlorination treatment to remove impurities from the platinum group metals concentrate and to activate the platinium group metals. The activated precious metals are then dissolved in acid, whereby their complexes are narrowly distributed in the leach solution. The dry chlorination pre-treatment and the subsequent dissolution in HCI/Cl₂ as described in WO 99/13115 results in an ideal feed solution for chromatographic separation.

Pre-conditioning of the feed solution appears to be critical to metal separations by liquid chromatography. One has to take into account that the chemical nature of a metal in a pure single metal solution is different from its nature in a complex solution containing more than one kind of metal ions. The final chemical properties, e.g. oxidation state, forms and abundance of various complexes, of a metal results from its interactions with other elements or ions, respectively, in the solution. Therefore conditioning the metal ions feed solution is an important step in order to allow the formation of appropriate ionic complexes, particularly halide complexes, which render the metal ions suitable for chromatographic separation.

### BRIEF DESCRIPTION OF THE INVENTION

The present invention is a further development of the PGM interseparation process described in WO 99/13115, the disclosure of which shall be incorporated herein by reference in its entirety. Although the interseparation of the PGM fractions according to the process of WO 99/13115 yields already good results, there was still a need for further improvement. This was mainly due to the observation that under the conditions of WO 99/13115 Ir(IV) elutes from the chromatographic bed at very slow speed. Therefore, the iridium fraction is more diluted compared to the other metal fractions. Another disadvantage associated with the slow moving Ir(IV) band is that a large portion of the chromatographic bed is occupied only for the elution of iridium which reduces its separation capacity and throughput.

Consequently, it is an object of the present invention to provide an improved method for pre-conditioning a crude PGM feed solution and for accelerating the passage of iridium through the particulate bed of a chromatographic column.

### BRIEF DESCRIPTION OF THE DRAWINGS

Fig. 1 shows the results of a chromatographic separation of an oxidized PGM solution in a batch column
Fig. 2 shows the results of a chromatographic separation of an oxidized PGM solution in a CAC column with *in situ* reductive step elution.
Fig. 3 shows the results of another chromatographic separation of an oxidized PGM solution in a CAC column with *in situ* reductive step elution.

### DETAILED DESCRIPTION OF THE INVENTION

In the present invention the platinum group metals are interseparated under strongly oxidizing condition. The feed solution is oxidized with either chlorine, hydrogen peroxide, another strong oxidant, for example H₂O₂, or electrochemically by anodic oxidation to bring up the redox-potential to at least 770 mV, preferably above 900 mV. Under these conditions, the majority of iridium ions is oxidized to Ir(IV) which allows maximum separation of iridium from rhodium.

In order to achieve a sharp separation between rhodium and iridium, the conversion from Ir(III) to Ir(IV) should be complete. The kinetics of this conversion has been thoroughly studied. Chlorination should be initialized at 50 to 80 °C and then continued at ambient temperature. The redox potential of the feed solution relative to the Ag/AgCl electrode shall be at least 900 mV, preferably at least 950 mV after the oxidation. In addition to temperature and duration of chlorination, aging of the feed solution after chlorination has been found to be important for the conversion of Ir(III) to Ir(IV) and to generate a favorable balance for the halide complexes opposite to chloride. The percentage of Ir(IV) in the feed solution first increases and then decreases with aging time. The peak in the concentration of Ir(IV) is reached 48 to 72 hours after the chlorination treatment. Aging of the feed for at least 12 hours is recommended to achieve an acceptable iridium conversion that enables elution of a rhodium fraction with a rhodium/iridium ratio of at least 200. If the conversion of Ir(III) to Ir(IV) in the feed solution is incomplete, the rhodium fraction is contaminated with iridium, and the rhodium/iridium ratio may drop to values as low as 117 or even lower after 48 hours of aging (see Table 1).

**Table 1:**

| Influence of aging of an incompletely oxidized feed solution after chlorine treatment on the sharpness of Rh-Ir separation | |
|---|---|
| **Duration of aging [hours]** | **Rh/Ir ratio in Rh fraction** |
| 0 | 24 |
| 12 | 56 |
| 48 | 117 |
| 120 | 35 |

The results of the experiments leading to the present invention also suggest that contrary to the assumption expressed in EP 0756013, oxidized PGMs in the feed solution, e.g. Ir(IV), are not being reduced by their interaction with the chromatographic medium during passage through the column. Instead, it appears that the sole reason for contamination of the rhodium fraction by iridium is an insufficient oxidation hence incomplete conversion of Ir(III) to Ir(IV). This finding was confirmed in a batch column experiment wherein an organic gel was loaded with a pure Ir(IV) solution prepared from an Ir(IV) ammonia salt. No Ir(III) fraction was detected before the Ir(IV) peak.

The aging time may be adjusted to a shorter duration or the aging may even be canceled, if anodic oxidation is performed instead of chlorination.

The eluent for the feed solution may be a HCI solution at any concentration, or even water. However, due to optional presence of tellurium (Te) and selenium (Se) in the crude feed solution, diluted HCI solutions (i.e. less than 0,5 N) may cause hydrolytic precipitation of Te and Se in the chromatographic bed and in the final purified fractions. The concentration of HCI further affects the retention time of platinum group metals in the chromatographic bed. The reason could be that the charge of platinum group metals in the feed solution partly changes in the chromatographic bed, because of the low HCI concentration in the eluent. Use of 3 N to 6 N HCI gives beneficial results for the feed solution.

The Ir(IV) is not reduced to a lower oxidation state during elution.

An advantage of the process of the present invention is that crude feed solutions can be taken from various stages of the metallurgic refining process. Usually, the solutions are a mixture of platinum group metals and other impurities in chloride media such as concentrated HCI solutions (approximately 20 to 30 % wt. HCI) or aqua regia. The total metal concentrations or the concentrations of each metal in the feed solutions need not be limited for successful chromatographic separation according to the present invention. The feed solution to be charged onto the chromatographic column is, however, preferably free of gold and fine solids. One way of removing gold from the feed solution is disclosed in WO 99/13115.

The chromatographic process of the present invention may be carried out by any suitable chromatographic arrangement for liquid chromatography such as, for instance, a chromatographic batch column or a continuously operating annular chromatograph, or by other chromatographic devices known in the art.

As the stationary phase various gels known for size exclusion or ion-exchange separation methods like polysaccarides (e.g. cross-linked dextrane, agarose), polyacrylates (e.g. polymethacrylate) or polystyrene gels may be used.

In batch column separations, the feed solution is injected onto the top of the column and is then eluted, e.g. by hydrochloric acid or halide salt solutions. Fractions are consecutively collected from the bottom of the column. Each fraction contains at least one of the platinum group metals. After completion of the elution cycle and subsequent washing and gel regeneration steps the column may again be charged with another sample of a PGM feed solution. In preparative continuos annular chromatographic (P-CAC) separations, feeding and elution are performed simultaneously and continuously and the metal fractions are collected at the bottom of the rotating annular bed. Under the conditions of the present invention the metal fractions may typically be collected at outlet positions located at rotation angels from 90° up to 360° relative to the inlet position of the feed solution.

The method of the present invention yields an average rhodium recovery of at least 99% after a single passage through the chromatographic bed, wherein the rhodium/iridium ratio in the rhodium fraction is at least 200 and wherein the rhodium fraction is substantially free of platinum (i.e. Pt amounts not detectable by this method). However, about 90% of the ruthenium present in the feed solution elutes together with the rhodium fraction. Base metals and amphoteric metals may also contaminate the rhodium fraction to some extent (see, for instance, Table 2).

**Table 2:**

| Percentage of the impurities present in the feed solution that contaminate the Rh fraction | | | | | | | | | |
|---|---|---|---|---|---|---|---|---|---|
| Element | Ni | Cu | Fe | As | Se | Te | Pb | Ag | Bi |
| Percent | 100 | 60 | 23 | 11 | 52 | 5 | 75 | 27 | 15 |

The iridium/rhodium ratio in the iridium fraction obtained by the method of the present invention is at least 380 on the average. The iridium fraction is free of base and amphoteric metals. Depending on different feed solutions, the iridium fraction may contain a small amount of ruthenium.

The platinum fraction obtained according to the present invention is substantially free of rhodium, ruthenium and iridium. Some base and amphoteric metals may contaminate the platinum fraction.

The PGM separation process according to the present invention is characterized by a step elution technique to accelerate the passage of Ir(IV) through the chromatographic bed. The step elution technique comprises feeding the oxidized PGM solution to the chromatographic medium (e.g., a batch column or a P-CAC column) to adsorb the metal ion halide complexes to the resin. The subsequent elution of the adsorbed complexes comprises as a first step the elution with hydrochloric acid or a halide salt solution or another suitable eluent, preferably with 3 - 6 M HCI solution. After elution of the Rh, Pt and Ru fractions has finished a second eluent which is a reducing agent is introduced to the column . in order to reduce the slowly moving iridium complexes from the tetravalent Ir(IV) to the trivalent Ir(III) state, because Ir(III) travels much quicker throught the chromatographic medium than Ir(IV). As the reducing agents ferrous salt solutions, ascorbic acid, or an other suitable reducing agents known in the art may be applied.

In addition to the acceleration of the iridium elution, this reductive step elution technique entails further benefits including a considerable decrease of the iridium dilution factor and the desorption and washing out of other slow moving complexes (e.g. ruthenium and lead) from the chromatographic bed.

In a further embodiment selective reducing agents such as for example ascorbic acid, ferrous(II)chloride or hydroxylamine hydrochloride may be employed to reduce selectively Ir(IV) to Ir(III).

Reduction of Ir(IV) to Ir(III) is kinetically fast and quantitative. Only a stoichiometric amount of a reducing agent is required for reduction. If Fe(II) is used for the reduction, contamination of the Ir(III) fraction by iron is minimized, since the majority of resulting Fe(III) is separated from the Ir(III) fraction while moving through the chromatographic bed. Reductive elution according to the present invention is a good example for a simultaneous reaction-separation process. The present step elution method comprising supplying a thoroughly oxidized PGM feed solution to a chromatographic medium and eluting a first number of different metal fractions under oxidizing conditions, and eluting a second number of metal fractions present in the feed solution under reducing conditions using a reducing agent as the second eluent, is advantageous over a process wherein the feed solution is reduced before it is supplied to the chromatographic medium. While the latter method (described, for instance, in EP 0756013) yields a first fraction wherein Ir, Ru, and Rh are eluted together and need to be separated afterwards by conventional methods, e.g., by solvent extraction, the process according to the present invention achieves an efficent separation of the Iridium fraction from the Ru and Rh fractions during a single chromatographic run, as can be seen e.g. in the figures.

The reductive step elution method of the present invention is most effectively carried out in a P-CAC arrangement: The second eluent, i.e. the reducing agent, is supplied to the top of the rotating circular chromatographic particle bed at an angular position located subsequently to the stationary inlet pipe for the feed solution at an angular distance sufficient to allow substantially complete elution of the Rh, Pt and Ru fractions by the first eluent which is supplied to the head-space of the CAC column and distributed over the entire annular gap on top of the chromatographic bed.

In a batch column the reducing agent can be added only after the collection of the rhodium, platinum and ruthenium fractions. The grade of separation in a batch column is comparable with that in the continuos annular chromatograph. However, the undesired dilution factor of metal fractions, expressed as metal concentration ratio in the feed and in the purified fraction, is much higher in batch columns than in continuous annular chromatographs. For example, with a rhodium recovery of above 99.5%, dilution factors of rhodium fractions in batch columns are 8 and in continuous annular chromatographs 2. Moreover, the more diluted the purified fractions the higher the costs of the subsequent metals and acid recovery, e.g., through evaporation.

In order that the invention described herein may be more fully understood, the following examples are set forth. The examples are for illustrative purposes only and are not to be construed as limiting this invention in any respect.

### Example 1: Interseparation of Platinum group metals using an oxidized feed in a batch column

The feed solution was oxidized by chlorine before being fed to the column, following the method described in WO 99/13115. The redox potential of the feed solution was 980 mV. A 1.0 ml feed sample was separated on a 160 x 10 mm column packed with PRIOR PGM Gel Type MK (manufactured by Prior Technologie GmbH, Götzis, Austria), which is a modified polymethacrylate gel on the basis of a Toyopearl® gel. The eluent flowrate of the first eluent (a 3N HCI solution) was 2.4 ml/min. Fraction samples were collected from the outlet of the column. The concentration in each fraction was analysed by emission spectroscopy using an ICP (inductively coupled plasma) method.

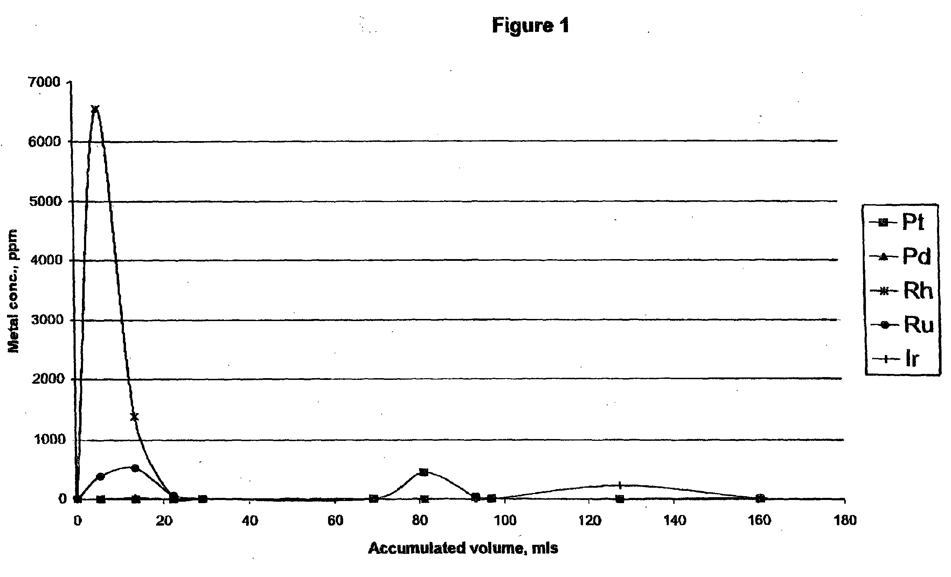

The metal concentrations in the various eluted fractions are listed in Table 3 while the chromatography results are plotted in Fig. 1. The metals exit the column in the order of rhodium, platinum, and iridium. Since iridium is oxidized to (IrCl₆)²⁻, it is well separated from the rhodium fraction. The rhodium/iridium ratio in the rhodium fraction is 1190. The platinum peak is clearly separated from the peaks of rhodium and iridium.

Ruthenium appears in two peaks. The first peak overlaps with rhodium. About 90% of the ruthenium present in the feed solution is recovered in the rhodium fraction. The rest of ruthenium is in the second peak that appears either before or after the iridium peak, depending on the feed solution and experimental conditions.

### Example 2: Interseparation of platinum group metals using an oxidized feed solution in a continuous annular chromatograph with in-situ step reductive elution

The stationary phase was enclosed in an annular ring between two cylinders. A layer of glass beads was packed on top of the size exclusion gel (SEG). The feed solution was pumped to the top of the bed through a stationary nozzle that extended into the layer of the glass beads. The first eluent was pumped into the CAC head-space above the particulate chromatographic bed and flew all around the annular bed. The annular bed rotated constantly at slow speed and the metal fractions exited from the bottom of the annular bed at different but constant rotational angles relative to the feeding point of the feed solution.

The reductive step elution was carried out by pumping the second eluent, i.e. the reducing agent, from another nozzle located at an angle sufficiently apart from the nozzle of the feeding solution to ensure that the Rh, Ru, Pt fractions. have already exited the chromatographic bed.

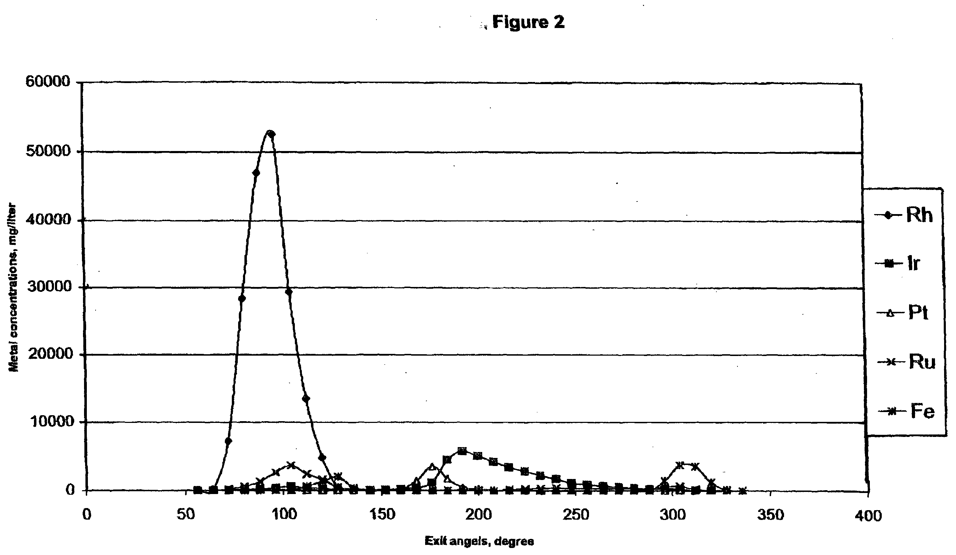

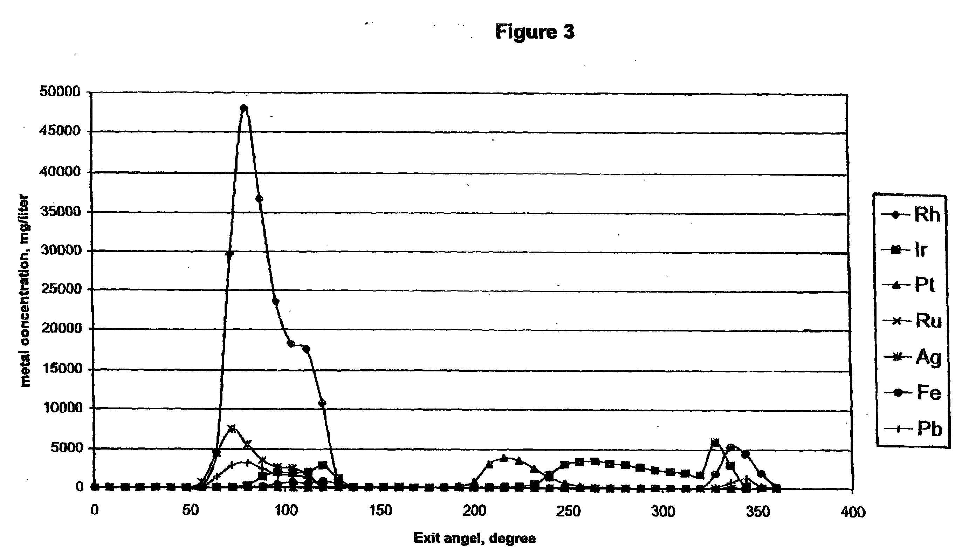

Results and experimental conditions from two experiments, with different heights of the stationary phase are shown in Tables 4 and 5 and in Figures 2 and 3.

The rhodium fraction collected from the CAC column is free of platinum; the rhodium/iridium ratio is above 1000, provided the feed solution has been subjected to the conditioning procedure outlined above; about 20 - 40% of the ruthenium in the feed is found in the rhodium fraction; if Ag, Pb, Ni, Cu, As or Bi are present in the feed solution, they also elute together with the rhodium fraction; the recovery of the precious metals after a single passage is at least 99.9%; the dilution factor, i.e. the ratio of the rhodium concentration in the feed solution and in the collected fraction(s) is about 1.5 to 2.0 when using a CAC column.

The separation characteristics of the iridium and platinum fractions in the CAC process also depend on the bed height of the chromatographic gel. If the bed height is increased from 7 cm (Table 4, Figure 2) to 13.5 cm (Table 5, Figure 3), the angle between the platinum and iridium peaks increases from 16° to 48°. About 70% of the iridium could be collected free of platinum contamination in Example 2b. Modeling results have shown that sharp separation between platinum and iridium requires a bed height of at least 18 cm. This was further proven in batch column experiments.

### Example 3: Improved method for a selective step-elution with reducing agents like ascorbic acid or ferrous(II)chloride

The chromatographic column may be a conventional batch column or a CAC column. The chromatographic separation medium, usually a particulate bed of a suitable resin or a combination of resins, may be composed of a cationic exchange resin as a bottom layer that is covered by a layer of a size exclusion gel. It is preferred that both layers be separated from each other by an inert layer such as a layer of glass pearls (e.g., 2 - 3 mm in diameter). The upper layer, i.e. the size exclusion gel, may also be covered by an inert layer of glass beads to provide for mechanical protection of the first gel layer (particularly useful for CAC arrangements) and to provide for a better charging of feed and eluent solutions to the first gel layer, as is known in the art.

The feed solution is oxidized to a potential above 900 mV (relative to the Ag/AgCl - electrode) following the above described conditioning procedure. In the preferred embodiment, the oxidized feed solution is introduced on top of the annular bed of a CAC column at angle position 0. The annular bed may be rotated at an angular frequency from 340 to 650°/h. The main eluent, 0.8M HCI, is fed into the head-space above the annular bed and evenly distributed all around the upper layer of the annular bed. At a rotational angle of 30° from the feeding point of the feed solution the reducing agent (e.g. a solution of 150 g/l ascorbic acid) as a step eluent is fed to the annular bed in a way much like the feed solution. At a rotational angle of 300° from the feeding point of the feed solution a 4 - 6 M HCI solution is fed to the annular bed as a step eluent for the cations.

As a result, the rhodium fraction is eluted at a rotational angle of about 20°, the iridium fraction at a rotational angle of about 35° - 40°, the palladium fraction at a rotational angle of about 90°, the platinum fraction at a rotational angle of about 120° and the base metal fraction at a rotational angle of about 340° (all angles are relative to the feeding point of the feed solution). The above indicated rotational angles for the exit positions of the eluted fractions may vary depending on the speed of rotation of the annular bed.

The main advantage of this method is the sharpness of separation of the main fractions of the PGM metals and the close vicinity of the interesting peaks, particularly of the iridium fraction that elutes immediately behind the rhodium fraction. Simulataneously, the peak of the base metal fraction is far away from the PGM metals fractions and thus does not contaminate them.

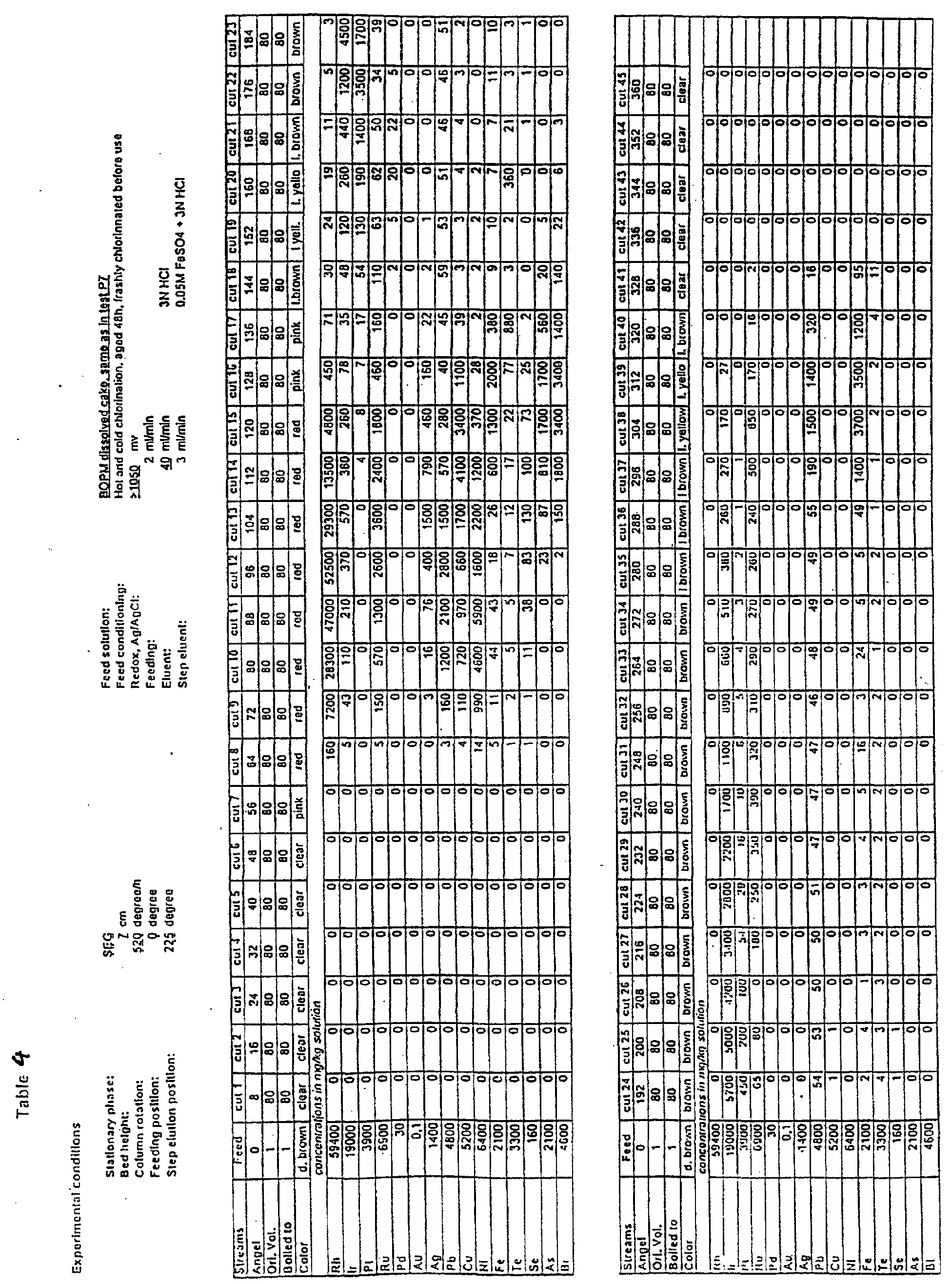

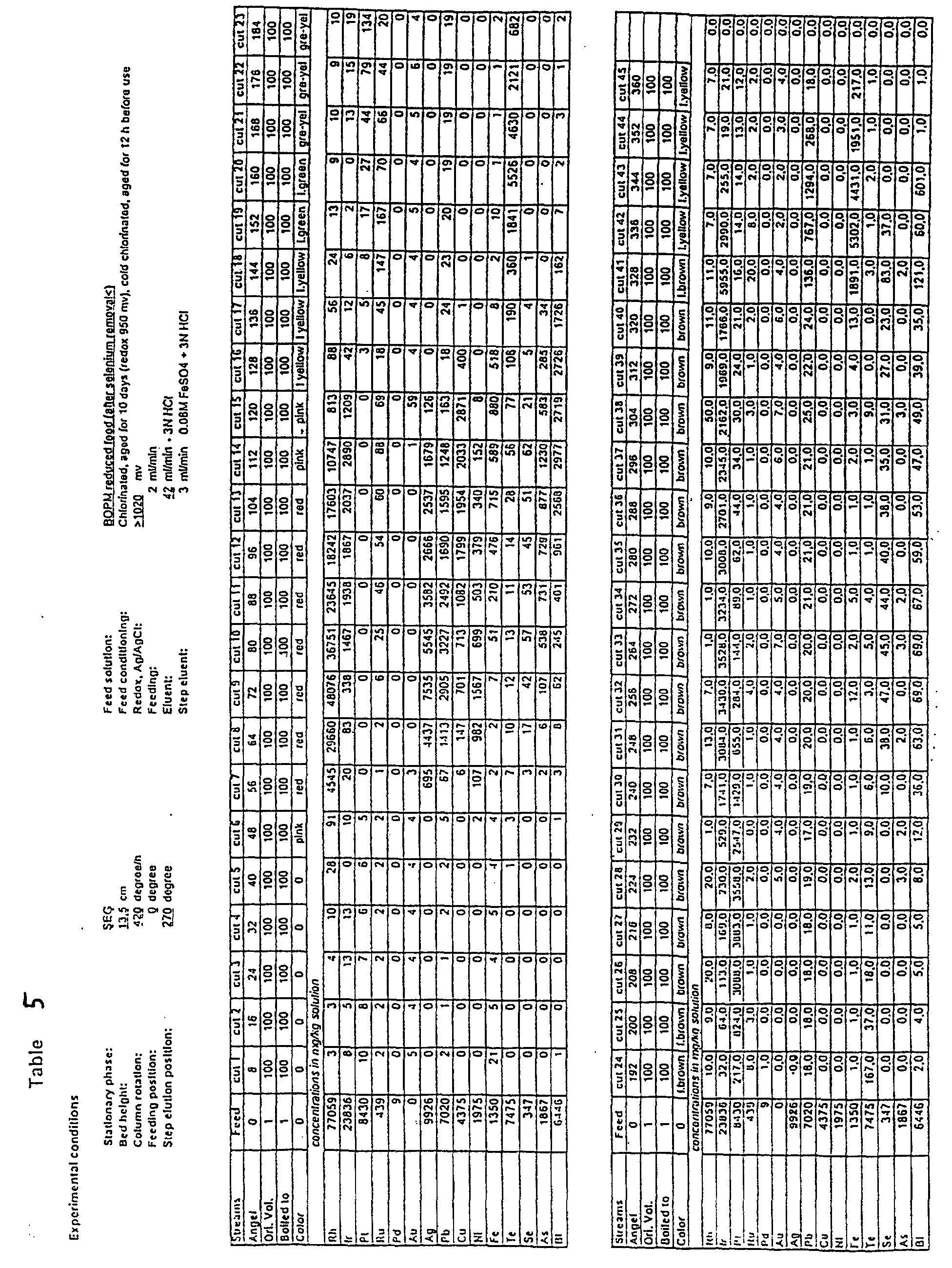

## Claims

1. A chromatographic method for interseparating platinum group metals (PGM) from a PGM containing feed solution which optionally further contains impurities such as base metals and amphoteric elements, **characterized in that** the method comprises the steps of:
a) oxidizing the feed solution to a redox-potential of at least 900 mV;
b) supplying the oxidized feed solution to a chromatographic medium and carrying out elution with a first eluent under oxidizing conditions;
c) carrying out elution with a second eluent under reducing conditions, the second eluent being a reducing agent; and
d) collecting at least iridium and rhodium in different fractions.

2. The method according to claim 1, wherein the redox-potential is at least 950 mV and preferably is in the range of from 950 to 1200 mV.

3. The method according to claim 1 or 2, wherein the oxidation is performed at a temperature of from 60° to 80° C, preferably by chlorination.

4. The method according to claim 1 or 2, wherein the oxidation is performed by anodic oxidation.

5. The method according to any one of claims 1 to 3, wherein aging of the oxidized solution is performed for at least 12 hours, preferably for a period of 48 to 72 hours, at ambient temperature before supplying the oxidized solution to a chromatographic medium.

6. The method according to any one of the preceding claims, wherein the first eluent is a 0,5 - 6 M HCI solution.

7. The method according to any one of the preceding claims, wherein elution with the reducing agent is carried out after the rhodium and platinum fractions have exited the chromatographic medium, preferably with an selective reducing agent, for example ascorbic acid, ferrous(II)chloride, hydroxylamine hydrochloride, etc.

8. The method according to any one of the preceding claims, further comprising elution of cations by means of a third eluent applied subsequently to the elution with the reducing agent, the third eluent preferably being a 4 - 6 M HCI solution.

9. A method according to any one of the preceding claims, wherein the chromatographic medium comprises a cation exchange resin as a bottom layer and a size exclusion gel as an upper layer, and preferably a layer of inert particles such as glass pearls arranged between the two layers and/or on top of the upper layer.

10. The method according to any one of the preceding claims, wherein the chromatographic medium is a crosslinked polysaccharide or a polymethacrylate resin, and the method is preferably carried out using a continuous annular chromatograph.
